# EUROPÄISCHE PATENTANMELDUNG

(11) **EP 4 296 230 A1**
(43) Veröffentlichungstag der Anmeldung: **27.12.2023**
(21) Anmeldenummer: 23178427.3
(22) Anmeldetag: 09.06.2023
(51) Int. Cl.: C01B 33/40

(54) **VERFAHREN ZUR HERSTELLUNG EINES ZWISCHENPRODUKTS FÜR DIE HERSTEL-LUNG VON ZEOLITHEN MITTELS KONZENTRIERTER SOLARSTRAHLUNG SOWIE VER-FAHREN ZUR HERSTELLUNG VON ZEOLITHEN**

(30) Priorität: 17.06.2022 DE 102022115156
(71) Anmelder: Deutsches Zentrum für Luft- und Raumfahrt e.V., 53227 Bonn (DE); ORTA DOGU TEKNIK UNIVERSITESI, 06800 Ankara (TR)
(72) Erfinder: Moumin, Gkiokchan, 51147 Köln (DE); Roeb, Martin, 51147 Köln (DE); Akata Kurc, Burcu, 06800 Ankara (TR); Pasabeyoglu, Pelin, 06800 Ankara (TR); de Oliveira, Lamark, 51147 Köln (DE)
(74) Vertreter: dompatent von Kreisler Selting Werner - Partnerschaft von Patent- und Rechtsanwälten mbB

(57) **Zusammenfassung**

Verfahren zur Herstellung eines Zwischenprodukts für die Herstellung von Zeolithen, mit folgenden Schritten:
a) Bereitstellen eines Ausgangsstoffs ausgewählt aus folgenden Stoffen: ein Schichtsilikat aus der Kaolinitgruppe, vorzugsweise Dickit, Kaolinit, Nakrit, Halloysit, Endellit und/oder Odinit, oder Perlit oder eines Gemisches aus zwei oder mehreren dieser Ausgangsstoffe,
b) Einleiten des Ausgangstoffs oder Ausgangstoffgemischs in einen Reaktionsraum eines Reaktors,
c) Erwärmen des in dem Reaktionsraum befindlichen Ausgangstoffs oder Ausgangstoffgemisches mittels konzentrierter Solarstrahlung auf eine vorgegebenen Temperatur und über einen vorgegebenen Zeitraum zur Kalzinierung des Ausgangstoffs oder Ausgangstoffgemisches,
d) Entnahme des in Schritt c) entstandenen Zwischenprodukts aus dem Reaktionsraum und Zuführen zu einem Weiterverarbeitungsabschnitt zur Herstellung von Zeolithen.

## Beschreibung

Die vorliegende Erfindung betrifft ein Verfahren zur Herstellung eines Zwischenprodukts für die Herstellung von Zeolithen mittels konzentrierter Solarstrahlung sowie ein Verfahren zur Herstellung von Zeolithen.

Zeolithe sind feste Bestandteile von Reinigungsmitteln und sind aufgrund ihrer Eigenschaft als Ionentauscher in diesen besonders vorteilhaft. Darüber hinaus werden Zeolithe als Katalysator verwendet oder sind ein Zusatzmittel für Zement.

Zur Herstellung von Zeolithen werden zumeist natürlich vorkommende Mineralien wie beispielsweise Kaolin verwendet. Dabei wird mittels eines relativ energieaufwendigen Schrittes das Kaolin kalziniert bzw. thermisch aktiviert. Dieser Vorgang wird auch Metakaolinisierung genannt und das gebildete Metakaolin ist ein Zwischenprodukt, das für die Zeolithherstellung verwendet wird. Dabei wird das Kaolin auf hohe Temperaturen im Bereich von 600-850° C erhitzt, wobei die kristalline Form des tonförmigen Kaolins in eine amorphe, reaktionsbereitere Form überführt wird. Dabei erfolgt eine Dehydrierung des Minerals. Die Reaktion wird auch Dehydroxylierung genannt.

Bei herkömmlichen Herstellungsmethoden erfolgt eine Erhitzung des Ausgangsstoffes in Öfen, die mittels fossiler Brennstoffe betrieben werden, sodass unweigerlich COz-Emissionen verursacht werden.

Es ist daher die Aufgabe der vorliegenden Erfindung, ein Verfahren zur Herstellung eines Zwischenprodukts für die Herstellung von Zeolithen sowie ein Verfahren zur Herstellung von Zeolithen bereitzustellen, das eine verringerte COz-Emission besitzt.

Die erfindungsgemäßen Verfahren sind definiert durch die Merkmale der Ansprüche 1 und 9.

Beim erfindungsgemäßen Verfahren zur Herstellung eines Zwischenprodukts für die Herstellung von Zeolithen werden folgende Schritte durgeführt:
a) Bereitstellen eines Ausgangsstoffs ausgewählt aus folgenden Stoffen: Schichtsilikat aus der Kaolinitgruppe, vorzugsweise Dickit, Kaolinit, Nakrit, Halloysit, Endellit oder Odinit, oder Perlit oder eines Gemisches aus zwei oder mehreren dieser Ausgangsstoffe,
b) Einleiten des Ausgangstoffs oder Ausgangstoffgemischs in einen Reaktionsraum eines Reaktors,
c) Erwärmen des in dem Reaktionsraum befindlichen Ausgangstoffs oder Ausgangstoffgemisches mittels konzentrierter Solarstrahlung auf eine vorgegebene Temperatur und über einen vorgegebenen Zeitraum zur Kalzinierung des Ausgangstoffs oder Ausgangstoffgemisches,
d) Entnahme des in Schritt c) entstandenen Zwischenprodukts aus dem Reaktionsraum und Zuführen zu einem Weiterverarbeitungsabschnitt zur Herstellung von Zeolithen.

Für die Herstellung eines kalzinierten bzw. thermisch aktivierten Zwischenprodukts für die Herstellung von Zeolithen haben sich die Schichtsilikate aus der Kaolinitgruppe als besonders vorteilhaft herausgestellt. Auch kann Perlit (Gestein) in vorteilhafter Weise verwendet werden. Grundsätzlich kann auch ein Gemisch aus zwei oder mehreren dieser Ausgangsstoffe verwendet werden.

Durch die Erwärmung des Ausgangsstoffs oder Ausgangsstoffgemischs in einem Reaktionsraums eines Reaktors, wobei der Ausgangsstoff oder das Ausgangsstoffgemisch mittels konzentrierter Solarstrahlung auf eine vorgegebene Temperatur und über einen vorgegebenen Zeitraum erhitzt wird, kann der Ausgangsstoff oder das Ausgangsstoffgemisch in vorteilhafter Weise und ohne bzw. nahezu ohne COz-Emission kalziniert werden. Dadurch ist das erfindungsgemäße Verfahren als besonders umweltfreundlich anzusehen.

Das auf diese Weise entstandene Zwischenprodukt kann in vorteilhafter Weise in einem Weiterverarbeitungsschritt zur Herstellung von Zeolithen verwendet werden.

Bei der Kalzinierung des Ausgangsstoffs oder Ausgangsstoffgemischs können im Wesentlichen drei Veränderungen des Materials erfolgen. Bei der Dehydroxylierung erfolgt ein Herauslösen des strukturell gebundenen Wassers. Außerdem erfolgt ein Auflösen der ursprünglichen Struktur. Bei den Schichtsilikaten aus der Kaolinitgruppe erfolgt dabei im Wesentlichen ein Auflösen der Schichtstruktur. Schließlich erfolgt ein Umstrukturierungsprozess, bei dem Metaformen des Ausgangsstoffs oder Ausgangsstoffgemischs gebildet werden.

Vorzugsweise ist die vorgegebene Temperatur >500° C, vorzugsweise zwischen 600 und 1000° C.

Der vorgegebene Zeitraum ist vorzugsweise wenige Minuten bis zu einer Stunde, beispielsweise 5 Minuten bis zu einer Stunde, vorzugsweise 10 Minuten und bis zu einer Stunde.

Bei dem erfindungsgemäßen Verfahren ist vorzugsweise vorgesehen, dass in Schritt c) eine Temperaturregelung durch eine Veränderung der Strahlungsflussdichte der konzentrierten Solarstrahlung erfolgt. Über die Steuerung mittels der Strahlungsflussdichte lässt sich die in den Reaktionsraum eingebrachte Leistung in besonders vorteilhafter Weise regeln.

Durch die Temperaturregelung mittels der Veränderung der Strahlungsflussdichte der konzentrierten Solarstrahlung ist eine Temperaturregelung auf besonders einfache Art und Weise möglich. Darüber hinaus können auf einfache Art und Weise unterschiedliche Typen von Zwischenprodukten hergestellt werden. Beispielsweise kann bei einer Aktivierung mit einer geringeren Leistung und somit einer geringeren Strahlungsflussdichte ein Zwischenprodukt geschaffen werden, dass für die Herstellung von Zeolith 4A verwendet werden kann. Mittels einer höheren Leistung und somit einer höheren Strahlungsflussdichte kann ein Zwischenprodukt geschaffen werden, das für die Herstellung von Zeolith 13X verwendet wird. Neben der Temperaturregelung kann grundsätzlich auch vorgesehen sein, dass der Ausgangsstoff entsprechend der gewünschten Herstellung eines Zwischenstoffes ausgewählt wird.

Grundsätzlich ermöglicht das erfindungsgemäße Verfahren jedoch auch, dass mit dem gleichen Ausgangsstoff, mit dem ein Zwischenprodukt für die Zeolith-4A-Herstellung möglich ist, ein Zwischenprodukt für die Herstellung von Zeolith 13X hergestellt wird, indem der Ausgangsstoff oder das Ausgangsstoffgemisch in Schritt c) mittels der konzentrierten Solarstrahlung auf eine vorgegebene Temperatur von über 950 °C erhitzt wird. Mittels konzentrierter Solarstrahlung sind derart hohe Temperaturen in vorteilhafter Weise und mit vergleichsweise geringem Aufwand und ohne COz-Emissionen erreichbar.

Vorzugsweise ist vorgesehen, dass in Schritt c) die Solarstrahlung mittels eines oder mehrerer Heliostaten konzentriert wird. Es kann beispielsweise vorgesehen sein, dass der Reaktor an einem Solarturm angeordnet ist, wobei mittels der Heliostaten Solarstrahlung auf den Reaktor und somit den Reaktionsraum konzentriert wird.

Vorzugsweise ist vorgesehen, dass die Schritte b) bis d) kontinuierlich durchgeführt werden. Grundsätzlich ist es auch möglich, dass das erfindungsgemäße Verfahren in einem Batch-Betrieb verwendet wird.

Der Reaktionsraum kann in einem Drehrohr gebildet sein, wobei die konzentrierte Solarstrahlung in Schritt c) durch eine an einem axialen Ende des Drehrohres gebildete Öffnung in den Reaktionsraum eingeleitet wird. Das erfindungsgemäße Verfahren kann somit vorsehen, dass die konzentrierte Solarstrahlung direkt auf den Ausgangsstoff oder das Ausgangsstoffgemisch gestrahlt wird und diesen erwärmt. Selbstverständlich ist eine derartige Ausführungsform des Verfahrens auch bei Reaktionsräumen, die nicht als Drehrohr ausgebildet sind, möglich.

Es kann auch vorgesehen sein, dass der Rektionsraum in einem Drehrohr gebildet ist, wobei die konzentrierte Solarstrahlung in Schritt c) das Drehrohr des Reaktionsraums erwärmt. Somit kann das erfindungsgemäße Verfahren auch vorsehen, dass eine indirekte Erwärmung des Ausgangsstoffs oder des Ausgangsstoffgemischs erfolgt, indem mittels der konzentrierten Solarstrahlung das Drehrohr erwärmt wird und die Erwärmung des Ausgangsstoffs oder des Ausgangsstoffgemischs erfolgt, indem das Drehrohr die Wärmeenergie an den Ausgangsstoff oder das Ausgangsstoffgemisch weiterleitet.

Es kann vorgesehen sein, dass in Schritt c) der Ausgangsstoff oder das Ausgangsstoffgemisch durch Drehung des Drehrohrs in dem oder durch den Reaktionsraum bewegt wird. Bei einem kontinuierlichen Betrieb des Drehrohrs kann vorgesehen sein, dass in Schritt b) der Ausgangsstoff oder das Ausgangsstoffgemisch an einem Ende dem Reaktionsraum zugeführt wird und nach der Bewegung durch den Reaktionsraum am anderen Ende des Drehrohres aus dem Reaktionsraum entnommen wird. Beim Batch-Betrieb kann vorgesehen sein, dass in Schritt b) der Reaktionsraum befüllt wird und in Schritt c) während der Erwärmung mittels konzentrierter Solarstrahlung das Drehrohr gedreht wird, sodass es zu einer Bewegung des Ausgangsstoffs oder des Ausgangsstoffgemischs in dem Reaktionsraum kommt. Anschließend wird das Zwischenprodukt dem Drehrohr entnommen.

Bei einem kontinuierlichen Betrieb des Drehrohres kann über eine Drehgeschwindigkeit des Drehrohres eine Verweilzeit des Ausgangsstoffs oder des Ausgangsstoffgemischs in dem Reaktionsraum gesteuert werden. Darüber kann auch der vorgegebene Zeitraum, über den der Ausgangsstoff oder das Ausgangsstoffgemisch erwärmt wird, gesteuert werden.

Die Erfindung betrifft ferner ein Verfahren zur Herstellung von Zeolithen, bei dem das erfindungsgemäße Verfahren zur Herstellung eines Zwischenprodukts zur Herstellung von Zeolithen durchgeführt wird und anschließend das Zwischenprodukt für die Herstellung von Zeolithen verwendet wird. Beispielsweise kann mittels des erfindungsgemäßen Verfahrens zur Herstellung von Zeolithen Zeolith 4A oder auch Zeolith 13X hergestellt werden.

Im Folgenden wird unter Bezugnahme auf die nachfolgenden Figuren das erfindungsgemäße Verfahren näher erläutert. Es zeigen:
- Fig. 1: eine schematische Darstellung eines Solarturms mit Reaktor, in dem das erfindungsgemäße Verfahren zur Herstellung eines Zwischenprodukts durchgeführt werden kann, und
- Fig. 2: eine schematische Darstellung eines Reaktorraums, in dem der Schritt c) des erfindungsgemäßen Verfahrens zur Herstellung eines Zwischenprodukts hergestellt werden kann.

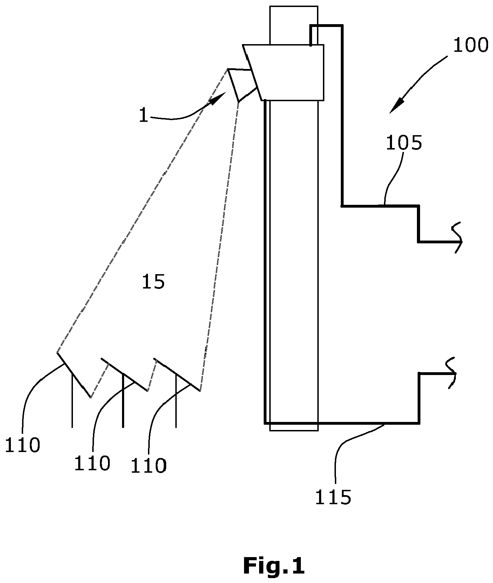

In Fig. 1 ist ein Solarturm 100 dargestellt, an dem ein einen Reaktorraum bildenden Reaktor 1 angeordnet ist. Mittels Heliostaten 110 wird Solarstrahlung 15 auf einen Eintritt des Reaktors 1 konzentriert.

Über eine schematisch dargestellte Leitung 105 wird ein Ausgangsstoff oder ein Ausgangsstoffgemisch dem Reaktor 1 zugeführt.

Nach der Durchführung des erfindungsgemäßen Verfahrens wird der kalzinierte Ausgangsstoff oder das kalzinierte Ausgangsstoffgemisch als Zwischenprodukt mittels einer weiteren Leitung 115 dem Reaktor 1 entnommen und einem nicht dargestellten Weiterverarbeitungsabschnitt zur Herstellung von Zeolithen zugeführt.

Bei dem erfindungsgemäßen Verfahren zur Herstellung eines Zwischenprodukts für die Herstellung von Zeolithen wird in einem Schritt a) zunächst der Ausgangsstoff bereitgestellt. Der Ausgangsstoff kann einer aus folgenden Stoffen sein: ein Schichtsilikat aus der Kaolinitgruppe, vorzugsweise Dickit, Kaolinit, Nakrit, Halloysit, Endellit und/oder Odinit, oder Perlit. Es kann auch ein Gemisch aus zwei oder mehreren dieser Ausgangsstoffe bereitgestellt und verwendet werden.

In einem Schritt b) wird der Ausgangsstoff oder ein Ausgangsstoffgemisch in einen Reaktionsraum 13 des Reaktors 1 eingeleitet.

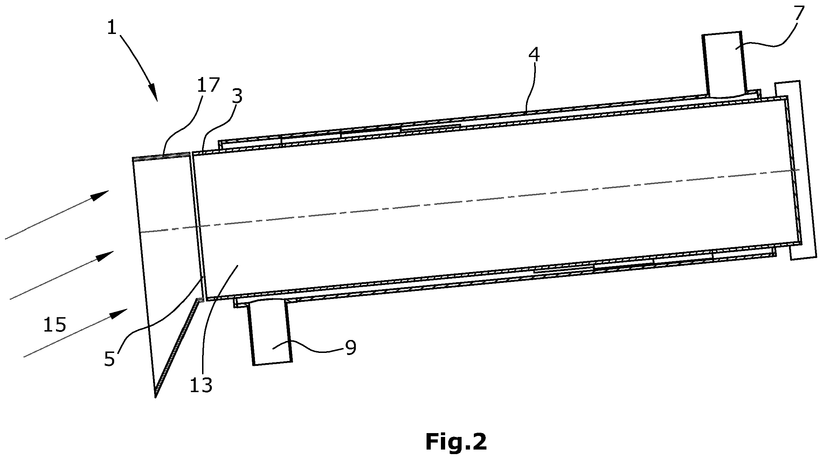

In Fig. 2 ist ein Reaktor 1 schematisch dargestellt.

Der Reaktor 1 weist ein Drehrohr 3 auf, in dem der Reaktionsraum 13 gebildet ist. Das Drehrohr 3 ist drehbar in einem Gehäuse 4 gelagert. Über einen Einlass 7 kann der Ausgangsstoff oder das Ausgangsstoffgemisch dem Reaktionsraum 13 zugeführt werden. In dem Reaktionsraum wird der Ausgangsstoff oder das Ausgangsstoffgemisch mittels konzentrierter Strahlung 15 auf eine vorgegebene Temperatur und über einen vorgegebenen Zeitraum erhitzt, sodass eine Kalzinierung des Ausgangsstoffs oder des Ausgangsstoffgemisches erfolgt. Die konzentrierte Solarstrahlung 15 wird dabei durch eine Öffnung 5 des Reaktionsraums 13, die an einem Ende des Drehrohrs 3 gebildet ist, in den Reaktionsraum 13 eingeleitet. Um zu verhindern, dass der Ausgangsstoff oder das Ausgangsstoffgemisch aus dem Reaktionsraum 13 durch die Öffnung 5 herausgelangen kann, kann die Öffnung 5 durch eine nicht dargestellte Scheibe verschlossen sein.

Ein Sekundärkonzentrator 17 ist die Öffnung 5 umgebend angeordnet, wodurch sichergestellt wird, dass die konzentrierte Solarstrahlung 15 in vorteilhafter Weise in den Reaktionsraum 13 geleitet wird.

Im Inneren des Reaktionsraums 13 wird Verfahrensschritt c) durchgeführt, in dem der in dem Reaktionsraum 13 befindliche Ausgangsstoff oder das Ausgangsstoffgemisch mittels der konzentrierten Solarstrahlung 15 erwärmt wird.

Anschließend wird das Zwischenprodukt, das der kalzinierte Ausgangsstoff oder das kalzinierte Ausgangsstoffgemisch ist, durch einen Auslass 9 dem Reaktionsraum 13 entnommen und dem Weiterverarbeitungsabschnitt zugeleitet.

Während des Verfahrensschritts c) kann das Drehrohr 3 gedreht werden, um eine Durchmischung des Ausgangsstoffs bzw. des Ausgangsstoffgemisches zu gewährleisten und somit eine gleichmäßige Erwärmung. Darüber hinaus kann durch die Drehung des Drehrohrs 3 sichergestellt werden, dass der Ausgangsstoff bzw. das Ausgangsstoffgemisch von dem Einlass 7 zu dem Auslass 9 transportiert wird.

Bei dem erfindungsgemäßen Verfahren kann kontinuierlich Ausgangsstoff oder ein Gemisch von Ausgangsstoffen durch den Einlass 7 dem Reaktionsraum 13 zugeführt werden, der in dem Reaktionsraum 13 befindliche Ausgangsstoff oder das in dem Reaktionsraum 13 befindliche Ausgangsstoffgemisch kontinuierlich mittels des konzentrierten Solarstrahlung 15 erwärmt werden und kontinuierlich das gebildete Zwischenprodukt durch den Auslass 9 entnommen werden.

Mittels der Drehgeschwindigkeit des Drehrohres 3 kann die Verweilzeit des Ausgangsstoffs bzw. des Ausgangsstoffgemisches im Reaktionsraum 13 in vorteilhafter Weise gesteuert werden.

Das erfindungsgemäße Verfahren ermöglicht in vorteilhafter Weise die Herstellung des Zwischenprodukts für die Zeolithherstellung auf umweltfreundliche Weise, indem keine oder nur eine geringe COz-Emission verursacht wird.

### BEZUGSZEICHENLISTE

- 1: Reaktor
- 3: Drehrohr
- 4: Gehäuse
- 5: Öffnung
- 7: Einlass
- 9: Auslass
- 13: Reaktionsraum
- 15: Solarstrahlung
- 17: Sekundärkonzentrator
- 100: Solarturm
- 105: Leitung
- 110: Heliostat
- 115: weitere Leitung

## Patentansprüche

1. Verfahren zur Herstellung eines Zwischenprodukts für die Herstellung von Zeolithen, mit folgenden Schritten:
a) Bereitstellen eines Ausgangsstoffs ausgewählt aus folgenden Stoffen: ein Schichtsilikat aus der Kaolinitgruppe, vorzugsweise Dickit, Kaolinit, Nakrit, Halloysit, Endellit und/oder Odinit, oder Perlit oder eines Gemisches aus zwei oder mehreren dieser Ausgangsstoffe,
b) Einleiten des Ausgangstoffs oder Ausgangstoffgemischs in einen Reaktionsraum eines Reaktors,
c) Erwärmen des in dem Reaktionsraum befindlichen Ausgangstoffs oder Ausgangstoffgemisches mittels konzentrierter Solarstrahlung auf eine vorgegebene Temperatur und über einen vorgegebenen Zeitraum zur Kalzinierung des Ausgangstoffs oder Ausgangstoffgemisches,
d) Entnahme des in Schritt c) entstandenen Zwischenprodukts aus dem Reaktionsraum und Zuführen zu einem Weiterverarbeitungsabschnitt zur Herstellung von Zeolithen.

2. Verfahren nach Anspruch 1, **dadurch gekennzeichnet, dass** in Schritt c) eine Temperaturregelung durch eine Veränderung der Strahlungsflussdichte der konzentrierten Solarstrahlung erfolgt.

3. Verfahren nach Anspruch 1 oder 2, **dadurch gekennzeichnet, dass** die in Schritt c) die Solarstrahlung mittels einer oder mehrere Heliostaten konzentriert wird.

4. Verfahren nach einem der Ansprüche 1 bis 3, **dadurch gekennzeichnet, dass** die Schritte b) bis d) kontinuierlich durchgeführt werden.

5. Verfahren nach einem der Ansprüche 1 bis 4, **dadurch gekennzeichnet, dass** der Reaktionsraum in einem Drehrohr gebildet ist, wobei die konzentrierte Solarstrahlung in Schritt c) durch eine an einem axialen Ende des Drehrohres gebildete Öffnung in den Reaktionsraum eingeleitet wird.

6. Verfahren nach einem der Ansprüche 1 bis 4, **dadurch gekennzeichnet, dass** der Reaktionsraum in einem Drehrohr gebildet ist, wobei die konzentrierte Solarstrahlung in Schritt c) das Drehrohr des Reaktionsraums erwärmt.

7. Verfahren nach Anspruch 5 oder 6, **dadurch gekennzeichnet, dass** in Schritt c) der Ausgangstoff oder das Ausgangstoffgemisch durch Drehung des Drehrohres in dem oder durch den Reaktionsraum bewegt wird.

8. Verfahren nach Anspruch 7, **dadurch gekennzeichnet, dass** über eine Drehgeschwindigkeit des Drehrohres eine Verweilzeit des Ausgangstoffs oder Ausgangstoffgemischs in dem Reaktionsraum gesteuert wird.

9. Verfahren zur Herstellung von Zeolithen, wobei das Verfahren nach einem der Ansprüche 1 bis 8 durchgeführt wird und anschließend das Zwischenprodukts für die Herstellung von Zeolithen verwendet wird.
